# EUROPÄISCHE PATENTSCHRIFT

(11) **EP 1 256 614 B1**
(45) Veröffentlichungstag und Bekanntmachung des Hinweises auf die Patenterteilung: **12.07.2006**
(21) Anmeldenummer: 02008978.5
(22) Anmeldetag: 23.04.2002
(51) Int. Cl.: C09J 7/02

(54) **Klebfolienstreifen**
Adhesive strip
Ruban adhésif

(30) Priorität: 10.05.2001 DE 10122747
(43) Veröffentlichungstag der Anmeldung: 13.11.2002
(73) Patentinhaber: tesa AG, 20253 Hamburg (DE)
(72) Erfinder: Zimmermann, Dieter, 21635 Jork (DE); Schulze, Walter, 25421 Pinneberg (DE)

(56) Entgegenhaltungen:
- EP-A- 0 273 997
- EP-A- 0 816 459

## Beschreibung

Die Erfindung betrifft einen beidseitig selbstklebenden Klebfolienstreifen sowie seine Herstellung.

Hochdehnbare elastisch oder plastisch unter Verstreckung deformierende, einseitig oder beidseitig haftklebrige Selbstklebebänder (Klebstoff-Folien), die durch Ziehen im wesentlichen in Richtung ihrer Verklebungsebene rückstands- und zerstörungsfrei wiederablöbar sind, sind bekannt. Mit ihnen hergestellte Verklebungen bieten kraftvollen Halt und lassen sich doch spurlos wiederablösen, sei es mit nur geringer Beschädigung des Untergrundes oder der Fügeteile oder gar ohne. Beispielhafte Klebebänder vorgenannter Art sind in US 4,024,312, DE 33 31 016, DE 42 22 849, WO 92/11332, WO 92/11333, US 5,516,581 und WO 95/06691 beschrieben.

Eine häufige Konfektionierform entsprechender Produkte sind Selbstklebebandzüschnitte, zum Beispiel in Form rechteckiger Streifen, welche an einem Ende einen klebfreien Anfasserbereich besitzen (siehe DE 42 22 849, WO 92/11333 bzw. US 5,516,581). Der Anfasser dient als Grifffläche für ein späteres Wiederablösen des Klebebandes. Im Handel sind solche Produkte unter der Bezeichnung "tesa Power-Strips®" erhältlich.

Praktische Probleme mit o.g. Produkten treten dann auf, wenn im Falle von doppelseitig haftklebrigen Selbstklebebändern das Selbstklebeband beim Ablöseprozeß reißt. Dieser Problematik nehmen sich insbesondere DE 42 22 849, DE 44 28 587 und DE 44 31 914 an. In der DE 42 22 849 beschriebene Klebebänder nutzen UV-undurchlässige Anfasserabdeckungen, welche die Reißerneigung im Anfasserbereich nach UV-Exposition reduzieren bzw. verhindern sollen. In der DE 44 28 578 beschriebene Klebebänder verfügen über ein besonders ausgeformtes Ende, welches einem partiellen Reißen des Klebebandes zum Ende des Ablöseprozesses entgegenwirkt. DE 44 31 914 beschreibt Klebebänder, welche im Anfasserbereich u.a. spezielle Folien- oder Papierabdeckungen aufweisen, die eine geringe Adhäsion zur verwendeten Selbstklebemasse besitzen, wodurch die Reißerneigung im Bereich des klebfreien Anfassers reduziert wird.

Während also Probleme mit Reißern weitgehend vermieden werden können, ist es bisher nicht gelungen, farblich ansprechende derartige Produkte in wirtschaftlich vertretbarer Weise herzustellen.

Farbige, dekorative derartige Klebfolienstreifen waren schon immer ein Wunsch. Dieser scheiterte aber bisher an dem enormen Reinigungsaufwand z.B. Kneter, Extruder, Schmelzpumpe, Schmelzpuffer, etc. der vollkontinuierlichen Fertigungslinie der Powerstrip-Familie.

Aus der EP 0 816 459 A2 ist ein Klebfolienstreifen für eine wiederlösbare Verklebung bekannt, der sich durch Ziehen in Richtung der Verklebungsebene rückstandsfrei und beschädigungslos ablösen lässt. Dieser Klebfolienstreifen weist zwingend einen Schichtaufbau auf aus einer elastischen Trägerschicht, die einseitig oder beidseitig mit einer Klebstoffschicht versehen ist.
Die Trägerschicht (und die Klebstoffschicht(en)) enthalten als Basispolymere Styrolblockcopolymere, abgemischt mit Klebharzen, welche mit dem Elastomerblock der verwendeten Styrolblockcopolymeren verträglich sind. Zur Trägerschicht können Farbpigmente zugesetzt werden.

Somit war es Aufgabe der Erfindung, hier Abhilfe zu schaffen, also einen farbigen derartigen Klebfolienstreifen zur Verfügung zu stellen, der eine problemlose Herstellung ermöglicht.

Gelöst wird diese Aufgabe durch einen Klebfolienstreifen und seine Herstellung, wie dies in den Ansprüchen näher gekennzeichnet ist. Um Wiederholungen zu vermeiden, wird ausdrücklich auf diese Ansprüche Bezug genommen.

Erfindungsgemäß ist bevorzugt, dass die Bedruckung nach dem UV-Flexodruckverfahren erfolgt. Hier hat man bzgl. der Gestaltung von Geometrien einen hohen Freiheitsgrad, kann besonders bahnförmige Materialien mit guter Druckqualität für volle Flächen, Linien, Bilder, Logos, Schriften usw. preiswert erzeugen.

Beim Bedrucken von sehr klebrigen Klebmassen ist vorteilhaft der hohen Klebrigkeit Rechnung zu tragen, indem dafür geeignete Verfahren eingesetzt werden, insb. berührungslose Druckverfahren, wie Siebdruck. Aber auch Flexodruck ist geeignet.

Beispielsweise wird auf eine Klebmasse gemäß dem Beispiel aus DE 33 31 016 ein UV-Lack gedruckt, UV-gehärtet, und dann wird auf die gehärtete Druckfarbe weitere Klebmasse wie zuvor aufkaschiert.

Bevorzugt wird jedoch eine transparente derartige Klebmasse eingesetzt, im Prinzip folgend dem Typ gemäß DE 33 31 016, jedoch im Detail wie folgt (Gew.%):

### Beispiel 1:

| | | | | | | |
|---|---|---|---|---|---|---|
| 28,50 | % | Kraton | GPR | 6919 | (Fa. | Shell) |
| 20,00 | % | Kraton | G | 1657 | (Fa. | Shell) |
| 30,00 | % | ESCOREZ | | 5618 | | |
| 20,00 | % | ESCOREZ | | 5690 | (Fa. | Exxon) |
| 0,50 | % | IRGANOX | | 3052 | | |
| 0,50 | % | Tinuvin | | 571 | | |
| 0,50 | % | Weston | | 399 | | |

Die einzelnen Arbeitsschritte erfolgen gemäß dem Beispiel in DE 33 031 016.

Für die Bedruckung werden 300µm dicke und 20cm breite sogenannte Mutterrollen geschnitten.

Zum Druckeinsatz kommt insb. ein kationisch- aushärtbarer UV-Lack SICPA 360076 von der Fa. SICPA;Aarberg, der z.B. blau angetönt wird. Durch Beimischung von 5 Gew.-% Zylinderabstoßmittel wird die Druckfarbe für die Verarbeitung optimiert. Mittels einer UV-Flexodruckmaschine ARSOMA em 410 wird die Klebmasse obiger bevorzugter Zusammensetzung bei einer Maschinengeschwindigkeit von 30m/min. über eine Flexodruckstation bedruckt. Die genau definierte Farbübertragung auf das Flexodruckklischee gelingt mittels einer entsprechenden Rasterwalze im Negativrakelverfahren. Es erfolgt danach die Farbübertragung vom Klischee auf das Foliensubstrat in einer Farbhöhe von 3 - 4 my.

Der Farbauftrag auf der Klebmasse in Form eines Foliensubstrats wird durch leistungsstarke UV-Strahlerröhren ausgehärtet. Hierfür wurde eine UV-Station Micro UV-Station GEW mit einer Strahlerleistung von 110 W/cm und einer Wellenlänge von 365 nm eingesetzt.

Auf diese bedruckte Seite wird nun eine unbehandeltes, transparente, 0,3 mm dicke Klebmasse Folie kaschiert, Zusammensetzung wie zuvor.
Durch rotatives Stanzen erhält man dann aus diesem Laminat dekorative Produkte, insb. in den bekannten Abmessungen.

Beide Klebmasse-Folien haben in diesem Beispiel eine Dicke von 300µm.

Die Farbschicht kann auch nachleuchtende Pigmente enthalten, insb. rieselfähige nachleuchtende Pigmente.

### Beispiel 2

Die beidseitig klebende, glasklare Klebmasse gemäß Beispiel 1, 300µm dick, wurde einseitig mit nachleuchtenden Pigmenten Lumilux + Effekt Grün N-FG, der Fa. HONEYWELL, grob bepudert. Das überschüssige, rieselfähige Pulver wurde durch Schütteln entfernt. Es verblieben gleichmäßig verteilt 60g/m² auf dem Material. Diese gepuderte Folie wurde danach in einer beheizten Presse (120°C) mit unbehandelter, transparenter Klebmasse-Folie gemäß Beispiel 1 (300µm dick) zusammenkaschiert.

Nach einer Bestrahlung (10sec.) mit einer 60 W-Leuchtstoffröhre ergab sich eine Nachleuchtdauer von 5 min. Kaschiert man nun 2 gepuderte Materialien zusammen, so erhält man (bei 120g/m²) eine ausgezeichnete Nachleuchtzeit von 10 min. Da bei dieser Technik die Pigmente in einer Ebene liegen, erzielt man eine erstaunlich gute Ausnutzung der Pigment-Eigenschaften, die in die Masse eingearbeitet, nicht zu erzielen ist.

Bei dieser Methode sind die Pigmente beidseitig geschützt. Besonders interessant ist der nachleuchtende Klebfolienstreifen in Kombination mit einer effektvollen transparenten Basisplatte und einem glasklaren Haken.

Alternativ erfolgt die Auftragstechnik analog der herkömmlichen Pulverlackbeschichtung. An dieser Stelle können ebenfalls die überschüssigen Pigmente (wie oben beschrieben) zurückgewonnen werden. Außerdem findet vorteilhaft mit Hilfe von zwei auf 120°C beheizten Quetschwalzen zwischen Trennpapier der eigentliche Kaschiervorgang statt.

## Patentansprüche

1. Beidseitig selbstklebender Klebfolienstreifen für Verklebungen, die durch Ziehen/Verstrecken in der Verklebungsebene wieder lösbar sind, mit
a) einer beidseitig angeordneten Klebmasse auf Basis von thermoplastischem Kautschuk und klebrigmachenden Harzen, mit hoher Elastizität und geringerer Plastizität, deren Adhäsion geringer ist als die Kohäsion, deren Haftvermögen beim Dehnen weitgehend verschwindet, und deren Verhältnis von Abzugskraft zu Reißlast mindestens 1:1,5 ist und
b) einer zwischen den beidseitig angeordneten Klebmassen befindlichen Farbschicht,
**dadurch gekennzeichnet, dass**
c) die Farbschicht ein Lack ist, der aufgedruckt ist.

2. Klebfolienstreifen nach Anspruch 1, **dadurch gekennzeichnet, dass** die Klebmasse transparent ist.

3. Klebfolienstreifen nach Anspruch 1, **dadurch gekennzeichnet, dass** er einen Anfasser zum Ziehen aufweist.

4. Klebfolienstreifen nach Anspruch 1, **dadurch gekennzeichnet, dass** die Klebmassen je 100 - 500 µm, insb. 200 - 400 µm dick sind und die Farbschicht 2 - 15 µm, insb. 2 - 8 µm dick ist.

5. Klebfolienstreifen nach Anspruch 1, **dadurch gekennzeichnet, dass** die Farbschicht im Flexodruckverfahren aufgedruckt ist.

6. Klebfolienstreifen nach Anspruch 1, **dadurch gekennzeichnet, dass** die Farbschicht ein UV-gehärteter Lack ist.

7. Klebfolienstreifen nach Anspruch 1, **dadurch gekennzeichnet, dass** die Farbschicht nachleuchtende Pigmente enthält.

8. Klebfolienstreifen nach Anspruch 1, **dadurch gekennzeichnet, dass** die Farbschicht einseitig auf die Klebmasse aufgedruckt ist, und eine weitere Klebmasse dann auf die ggf. getrocknete u/o gehärtete Farbschicht aufkaschiert ist.

9. Verfahren zur Herstellung eines Klebfolienstreifens nach einem der Ansprüche 1 - 8, **dadurch gekennzeichnet, dass** man auf eine Klebmasse eine Farbschicht aufdruckt und anschließend auf diese Farbschicht eine weitere Schicht Klebmasse aufkaschiert.

10. Verfahren nach Anspruch 9, **dadurch gekennzeichnet, dass** man die Farbschicht trocknet u/o härtet, insbesondere UV-härtet.

## Claims

1. Double-sidedly self-adhesive film strip for adhesive bonds which are redetachable by pulling/stretching in the bond plane, having
a) a double-sidedly disposed adhesive based on thermoplastic rubber and tackifying resins, having high elasticity and relatively low plasticity, whose adhesion is lower than the cohesion, whose adhesiveness largely disappears on extension, and whose ratio of peel force to tensile load is at least 1:1.5, and
b) a colour layer located between the double-sidedly disposed adhesives,
**characterized in that**
c) the colour layer is a varnish applied by printing.

2. Adhesive film strip according to Claim 1, **characterized in that** the adhesive is transparent.

3. Adhesive film strip according to Claim 1, **characterized in that** it has a grip tab for pulling.

4. Adhesive film strip according to Claim 1, **characterized in that** the adhesives are each 100-500 µm, especially 200-400 µm, thick and the colour layer is 2-15 µm, especially 2-8 µm, thick.

5. Adhesive film strip according to Claim 1, **characterized in that** the colour layer is applied by flexographic printing.

6. Adhesive film strip according to Claim 1, **characterized in that** the colour layer is a UV-cured varnish.

7. Adhesive film strip according to Claim 1, **characterized in that** the colour layer comprises afterglow pigments.

8. Adhesive film strip according to Claim 1, **characterized in that** the colour layer is applied by printing to the adhesive on one side, and a further adhesive is then laminated onto the optionally dried and/or cured colour layer.

9. Process for producing the adhesive film strip according to one of Claims 1-8, **characterized in that** a colour layer is applied by printing to an adhesive and then a further layer of adhesive is laminated onto this colour layer.

10. Process according to Claim 9, **characterized in that** the colour layer is dried and/or cured, in particular UV-cured.

## Revendications

1. Ruban autoadhésif double face pour des collages pouvant être décollés par traction/étirement dans le plan du collage, avec
a) une masse collante disposée des deux côtés, sur la base de caoutchouc thermoplastique et de résines rendant adhésif, avec une élasticité élevée et une plasticité réduite, dont l'adhérence est inférieure à la cohésion, dont le pouvoir adhésif disparaît dans une large mesure à l'étirement, et dont le rapport de la force de détachement par rapport à la charge de rupture est au moins de 1:1,5 et
b) une couche de couleur située entre les deux masses collantes disposées de part et d'autre,
**caractérisé en ce que**
c) la couche de couleur est une laque imprimée.

2. Ruban adhésif selon la revendication 1, **caractérisé en ce que** la masse collante est transparente.

3. Ruban adhésif selon la revendication 1, **caractérisé en ce qu'**il est muni d'une zone de saisie pour tirer.

4. Ruban adhésif selon la revendication 1, **caractérisé en ce que** les masse collantes ont chacune une épaisseur de 100 - 500 µm, notamment de 200 - 400 µm, et **en ce que** la couche colorée a une épaisseur de 2 - 15 µm, notamment de 2- 8 µm.

5. Ruban adhésif selon la revendication 1, **caractérisé en ce que** la couche colorée est imprimée par le procédé de la flexographie.

6. Ruban adhésif selon la revendication 1, **caractérisé en ce que** la couche colorée est une laque durcie aux UV.

7. Ruban adhésif selon la revendication 1, **caractérisé en ce que** la couche colorée contient des pigments phosphorescents.

8. Ruban adhésif selon la revendication 1, **caractérisé en ce que** la couche colorée est imprimée d'un côté sur la masse collante et **en ce qu'**une autre masse collante est ensuite laminée sur la couche colorée séchée et/ou durcie le cas échéant.

9. Procédé pour la fabrication d'un ruban adhésif selon l'une des revendications 1 à 8, **caractérisé en ce qu'**une couche colorée est imprimée sur une masse collante et que cette couche colorée est ensuite revêtue d'une autre couche de masse collante.

10. Procédé selon la revendication 9, **caractérisé en ce que** la couche colorée est séchée et/ou durcie, notamment durcie aux UV.
